# EUROPÄISCHE PATENTANMELDUNG

(11) **EP 1 477 384 A2**
(43) Veröffentlichungstag der Anmeldung: **17.11.2004**
(21) Anmeldenummer: 04007484.1
(22) Anmeldetag: 27.03.2004
(51) Int. Cl.: B62B 13/18

(54) **Fahrwerkelement für einen Schlitten**

(30) Priorität: 14.05.2003 DE 10321597
(71) Anmelder: Wild, Andreas, 70806 Kornwestheim (DE)
(72) Erfinder: Wild, Andreas, 70806 Kornwestheim (DE)
(74) Vertreter: Grosse, Rainer

(57) **Zusammenfassung**

Die Erfindung betrifft ein Fahrwerkelement (8) für einen Schlitten (1), mit einem Basisteil (9) und einem um eine Drehachse (12) schwenkbar mit dem Basisteil (9) verbundenen Radträger (11), der mittels einer Arretiervorrichtung (13) in mindestens zwei, einen Kufenbetrieb oder einen Radbetrieb ermöglichenden Winkellagen relativ zum Basisteil (9) arretierbar ist, wobei das Basisteil (9) als vorzugsweise abnehmbare Halteplatte (10) mit einer Befestigungseinrichtung (23) für einen Querträger (5) und/oder ein Vertikalholm-Paar (3) und/oder eine Versteifungsstrebe (37) und/oder mindestens eine Sitzlatte (7) des Schlittens (1) ausgebildet ist.

## Beschreibung

Die Erfindung betrifft ein Fahrwerkelement für einen Schlitten, mit einem Basisteil und einem um eine Drehachse schwenkbar mit dem Basisteil verbundenen Radträger, der mittels einer Arretiervorrichtung in mindestens zwei, einen Kufenbetrieb oder einen Radbetrieb ermöglichenden Winkellagen relativ zum Basisteil arretierbar ist.

Ein Fahrwerkelement der genannten Art geht aus der deutschen Patentschrift DE 198 50 503 hervor. Dies weist aus gekantetem Blech hergestellte, Basisteile bildende Radträger auf, die mittels einer stabförmigen, verlängerbaren Spanneinrichtung gegen die Innenseiten der Querstreben des Schlittens gespannt werden. Diese Befestigungsart hat sich bewährt, ermöglicht jedoch nicht bei jedem Schlitten eine befriedigende Fahrwerkszuordnung, denn beispielsweise lässt sich ein längerer, mit drei Vertikalholm-Paaren ausgestatteter Schlitten durch die Teleskopverspannung nur an den zwei Vertikalholm-Paaren zugeordneten Querträgern mit Rädern versehen, wobei es sich nicht um die beiden äußeren Querträger handelt, sondern um einen äußeren und einen mittleren Querträger. Ferner ist das bekannte Fahrwerkelement konstruktiv aufwendig und daher relativ teuer.

Der Erfindung liegt die Aufgabe zugrunde, ein Fahrwerkelement für einen Schlitten anzugeben, das vielseitig und im Wesentlichen unabhängig von der Bauform des Schlittens einsetzbar sowie kostengünstig ist.

Diese Aufgabe wird erfindungsgemäß gelöst durch die Merkmale des Anspruchs 1, wobei das Basisteil als abnehmbare Halteplatte mit einer Befestigungseinrichtung für einen Querträger und/oder ein Vertikalholm-Paar und/oder eine Versteifungsstrebe und/oder mindestens eine Sitzlatte des Schlittens ausgebildet ist. Durch die erfindungsgemäße Ausgestaltung des Basisteils als abnehmbare Halteplatte ist eine sehr einfache Bauform realisiert. Beispielsweise kann das Material der Halteplatte - entsprechend dem Material des Schlittens, also aus Holz - gewählt werden, so dass für die Herstellung das Basisteil lediglich aus einer Holzplatte, Faserplatte oder Spanplatte herausgesägt werden muss. Aufgrund der Plattenform liegen ebene Anlageflächen vor, mit denen sich die Halteplatte an dem zugeordneten Querträger abstützt. Bevorzugt kann dabei vorgesehen sein, dass die Halteplatte mit einer ihrer Stirnflächen gegen die Unterseite einer oder mehrer Sitzlatten tritt, so dass die Abstützung der Halteplatte im Winkelbereich von Querträger und Sitzlatte(n) angeordnet und daher großflächig abgestützt ist. Sie ist aufgrund dieser Anordnung in der Lage, große Kippmomente problemlos und ohne nennenswerte Verlagerung aufzunehmen. Zur Befestigung der Halteplatte ist eine Befestigungsvorrichtung für einen Querträger und/oder ein Vertikalholm-Paar und/oder eine Versteifungsstrebe und/oder mindestens eine Sitzlatte des Schlittens vorgesehen.

Die Erfindung betrifft ferner ein Fahrwerkelement für einen Schlitten, mit einem Basisteil und einem um eine Drehachse schwenkbar mit dem Basisteil verbundenen Radträger, der mittels einer Arretiervorrichtung in mindestens zwei, einen Kufenbetrieb oder einen Radbetrieb ermöglichenden Winkellagen relativ zum Basisteil arretierbar ist, wobei das Bassteil einstückig mit einem Querträger des Schlittens ausgebildet ist. Diese Ausgestaltung ermöglicht gegenüber der zuvor erwähnten Ausführungsform keine Abnahme des Fahrwerkelements, da die Einstückigkeit zum Querträger besteht. Da das Fahrwerkelement jedoch verschwenkbar am Basisteil gelagert ist, kann sowohl ein Kufenbetrieb als auch ein Radbetrieb erfolgen. Im Kufenbetrieb wird der Radträger relativ zum Basisteil in eine Horizontalstellung verschwenkt, so dass seine Räder einen vorzugsweise möglichst großen Abstand zum vorzugsweise schneebedeckten Erdboden aufweisen. Der Schlitten berührt daher mit seinen Kufen den Schnee. Im Radbetrieb ist der Radträger gegenüber dem Basisteil in eine vorzugsweise vertikale Stellung verschwenkt, in der die Räder des Radteils die Kufen des Schlittens nach unten hin überragen, so dass die Kufen einen Abstand zum Erdboden aufweisen und die Räder bei einer Schlittenbewegung auf dem Erdboden abrollen. Da Basisteil und Querträger einstückig ausgebildet sind, liegt eine sehr haltbare Bauweise vor, die allerdings nur bei Neu-Schlitten realisiert. wird, also keine nachträgliche Ausstattung eines Schlittens mit einem Fahrwerkelement gestattet. Das zuvor erwähnte, abnehmbare Fahrwerkelement kann problemlos auch einem bereits genutzten Schlitten nachträglich zugeordnet werden. Es besteht auch die Möglichkeit, die Zuordnung nur bei Bedarf vorzusehen, das heißt, für den Fall, dass hinreichend viel Schnee zur Verfügung steht, kann das Fahrwerkelement abmontiert werden. Ist es fraglich, ob dem Schlittenbenutzer auf seiner Route überall hinreichend Schnee zur Verfügung steht, so wird er mindestens zwei Fahrwerkelemente am Schlitten befestigen und bei Bedarf den Radträger in die Stellung "Kufenbetrieb" oder die Stellung "Radbetrieb" verschwenken und arretieren. Liegt kein Schnee, z.B. im Sommer, so ist auch ein reiner Radbetrieb denkbar.

Der Radträger ist vorzugsweise ebenfalls plattenförmig ausgestaltet, so dass auch dieser sehr einfach herstellbar ist. Die Kontur des Radträgers wird dann vorzugsweise lediglich aus einer entsprechenden Holzplatte oder Spanplatte herausgesägt, wobei die Anordnung vorzugsweise derart getroffen sein kann, dass die Dicke der Halteplatte der Dicke des plattenförmigen Radträgers entspricht oder etwa entspricht, beide Teile können z.B. aus der gleichen Holzplatte ausgesägt werden.

Es ist für die einstückige Ausgestaltung von Basisteil und Querträger vorteilhaft, wenn das Basisteil als Halteplatte gemeinsam mit dem Querträger ausgebildet ist, also zusammen mit dem Querträger aus einer Holzplatte oder einer Spanplatte oder dergleichen gefertigt ist.

Bevorzugt ist vorgesehen, dass die Befestigungseinrichtung mindestens eine Klemmvorrichtung mit für die Klemmung sich aufeinander zu bewegenden Klemmbacken aufweist. Mittels der Klemmvorrichtung lässt sich das Fahrwerkelement abnehmbar am Schlitten befestigen. Die Anordnung ist dabei stets so getroffen, dass sich das Basisteil an dem zugeordneten Querträger des Schlittens klemmend abstützt oder integral mit dem Querträger ausgebildet ist.

Die Klemmwirkung der Klemmbacken der Klemmvorrichtung wird bevorzugt mittels einer Schraubvorrichtung bewirkt. Durch Anziehen der Schraubvorrichtung entfaltet sich die Klemmwirkung; beim Lockern der Schraubvorrichtung lässt die Klemmwirkung nach, so dass das Fahrwerkelement vom Schlitten abgenommen werden kann.

Nach einer Weiterbildung der Erfindung ist mindestens eine Klemmbacke - im nicht geklemmten Zustand - längsverschieblich an der Halteplatte gelagert. Dies hat den Vorteil, dass die Klemmbacke in die gewünschte Position gebracht werden kann, um optimale Klemmwirkung zu entfalten. Die jeweilig anzufahrende Position der Klemmbacke hängt von der Bauform des Schlittens ab. Bevorzugt ist die Längsverschieblichkeit in seitlicher Richtung, also quer zur Schlittenlängsachse, gewährleistet. Insbesondere ist dabei vorgesehen, dass die Längsverschiebbarkeit mittels mindestens eines, die Halteplatte durchsetzenden, von der Schraubvorrichtung durchgriffenen Langlochs bewirkt ist.

Nach einer bevorzugten Ausführungsform der Erfindung ist eine Fixierstiftvorrichtung zwischen Halteplatte und Querträger und/oder Vertikalholm-Paar vorgesehen. In einem solchen Falle sorgen die Fixierstifte für eine unverschiebliche Zuordnung von Halteplatte und Querträger beziehungsweise Vertikalholm-Paar. Die Fixierstifte bilden die Verbindung zwischen Halteplatte und Querträger beziehungsweise Vertikalholm-Paar durch Presspassung. Zusätzlich kann eine Verklebung erfolgen. Alternativ zur Klebung kann auch eine Klemmvorrichtung eingesetzt werden, so dass quer zur Klemmwirkung der Klemmvorrichtung eine Lagefixierung durch die Fixierstifte ausgebildet ist.

Ferner ist es vorteilhaft, wenn die Befestigungseinrichtung eine Verschraubung der Basisplatte mit dem Querträger und/oder dem Vertikalholm-Paar aufweist. Die Verschraubung kann in Form von Schrauben ausgebildet sein, so dass auf eine mit Klemmbacken versehene Klemmvorrichtung verzichtet werden kann. Vielmehr wird die Halteplatte mittels der Schrauben an dem Querträger und/oder dem Vertikalholm-Paar direkt fixiert.

Die Befestigungseinrichtung kann - nach einem weiteren Ausführungsbeispiel der Erfindung - mindestens eine, um eine Sitzlatte des Schlittens legbare Spannschlaufe aufweisen. Die Halteplatte befindet sich in einer Position, in der sie mit ihrer Stirnseite gegen die Unterseite mindestens einer Sitzlatte, vorzugsweise mehrerer Sitzlatten anliegt. Mit mindestens einer, um die Sitzlatte herumgeführten Spannschlaufe erfolgt die Befestigung der Halteplatte am Schlitten. Die Spannschlaufe lässt sich in ihrem Durchmesser so weit reduzieren, dass ein fester Sitz gewährleistet ist. Vorzugsweise besitzt die Halteplatte eine sehr große Dicke, um eine möglichst große Auflagefläche an der Unterseite der Sitzlatte zu erzielen und ist insoweit auch in der Lage, Knickmomente abzufangen.

Die Erfindung betrifft ferner einen Schlitten mit mindestens einem Fahrwerkelement nach einem oder mehreren der vorhergehenden Ansprüche.

Die Zeichnungen veranschaulichen die Erfindung anhand von Ausführungsbeispielen und zwar zeigt:
- Figur 1: eine Draufsicht auf ein an einem Schlitten befestigtes Fahrwerkelement,
- Figur 2: eine Seitenansicht der Darstellung der Figur 1,
- Figur 3: ein weiteres Ausführungsbeispiel eines an einem Schlitten befestigten Fahrwerkelements,
- Figur 4: ein weiteres Ausführungsbeispiel eines an einem Schlitten befestigten Fahrwerkelements,
- Figur 5: ein weiteres Ausführungsbeispiel eines an einem Schlitten befestigten Fahrwerkelements und
- Figur 6: ein letztes Ausführungsbeispiel eines an einem Schlitten befestigten Fahrwerkelements.

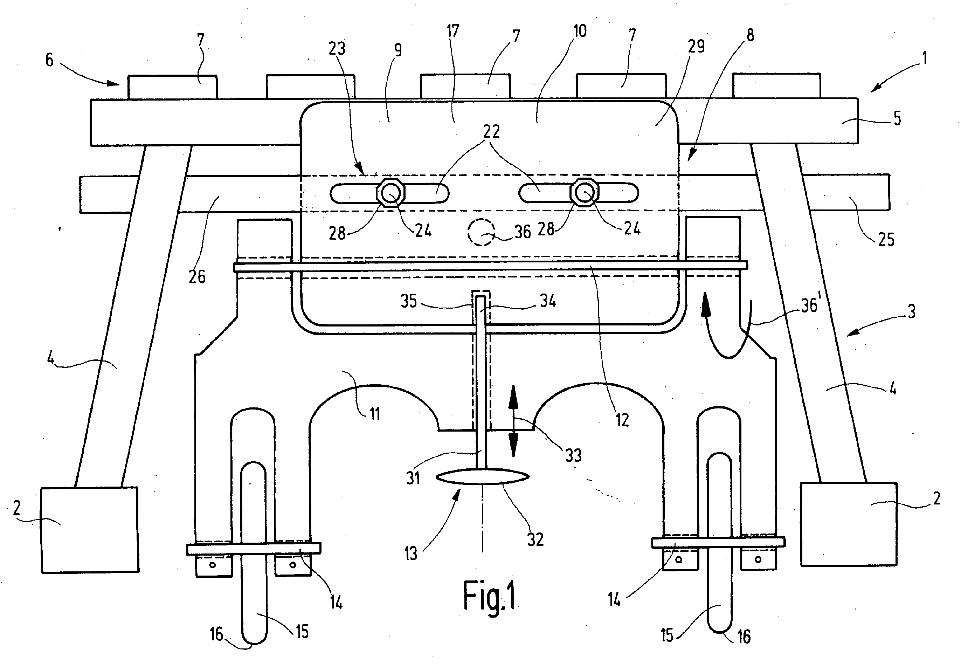

Die Figur 1 zeigt einen Schlitten 1, der zwei Kufenholme 2 aufweist, von denen - über die Längserstreckung des Schlittens 1 gesehen - mehrere Vertikalholm-Paare 3 mit Vertikalholmen 4 ausgehen. Jedes Vertikalholm-Paar 3 verläuft bis zu einem Querträger 5, auf dem die Sitzfläche 6 angeordnet ist, die aus mehreren, in Schlittenlängsrichtung verlaufenden Sitzlatten 7 besteht. Das gemäß Figur 1 am Schlitten 1 lösbar befestigte Fahrwerkelement 8 weist ein Basisteil 9 auf, das als Halteplatte 10 ausgebildet ist. An der Halteplatte 10 ist ein plattenförmiger Radträger 11 um eine Drehachse 12 schwenkbar gelagert. Mindestens zwei Schwenkstellungen lassen sich mittels einer Arretierungsvorrichtung 13 fixieren, um einen Kufenbetrieb oder einen Radbetrieb zu ermöglichen. Am Radträger 11 sind zwei zueinander fluchtende Radachsen 14 ausgebildet, die zwei in Schlittenlängsrichtung orientierte Räder 15 tragen, deren Laufflächen 16 in der Radbetrieb-Stellung des Radträgers 11 die mit Kufen versehenen Kufenholme 2 nach unten hin überragen.

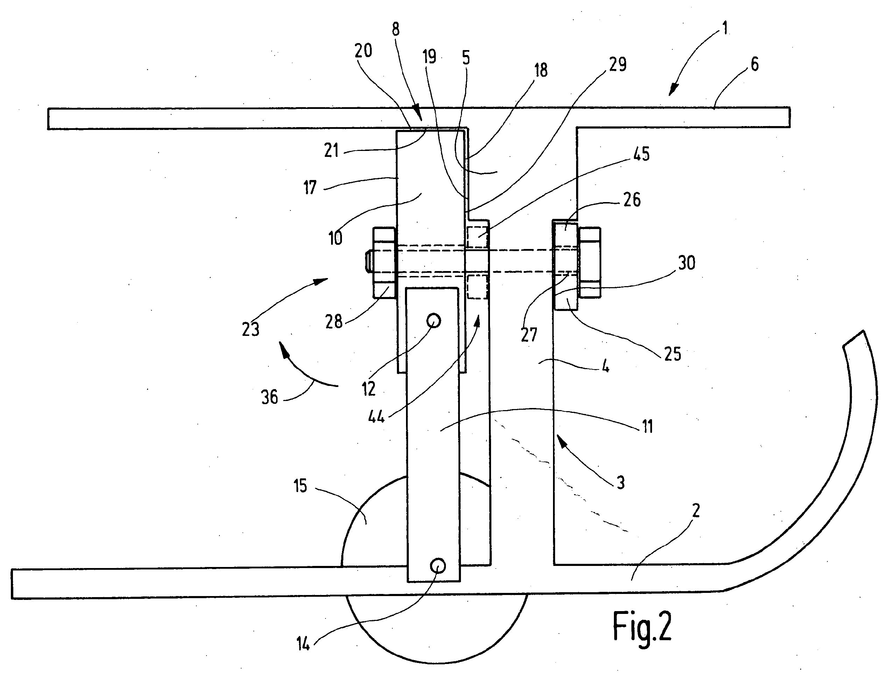

Die Halteplatte 10 ist beim Ausführungsbeispiel der Figur 1 rechteckförmig gestaltet, wobei sie mit ihrer Vorderseite 17 vom zugehörigen Querträger 5 des Schlittens 1 wegweist (s. insbesondere auch Figur 2). Mit dem oberen Bereich ihrer Rückseite 18 stützt sich die Halteplatte an der Seitenwand 19 des Querträgers 5 ab. Ferner kann zusätzlich vorgesehen sein, dass eine Abstützung der oberen Stirnseite 20 der Halteplatte 10 an den Unterseiten 21 zumindest einiger, vorzugsweise dreier Sitzlatten 7 erfolgt. Damit schmiegt sich die Haltplatte 10 in den aus Sitzlatten 7 und Querträger 5 gebildeten Winkel ein. Die Haltplatte 10 wird von zwei horizontal verlaufenden, in Längsrichtung zueinander beabstandeten Langlöchern 22 einer Befestigungseinrichtung 23 durchsetzt. Die beiden Langlöcher 22 werden jeweils von einer Gewindeschraube 24 durchgriffen, die sich - in Schlittenlängsrichtung - bis in einen Bereich vor das zugeordnete Vertikalholm-Paar 3 erstreckt. Dort weist die Befestigungseinrichtung 24 eine Klemmbacke 25 in Form einer Querlatte 26 auf, die derart lang ist, dass sie die Vertikalholme 4 nach außen überragt (Figur 1). Die Gewindeschrauben 24 durchgreifen entsprechende Öffnungen 27 der Klemmbacke 25 und sind mit Muttern 28 versehen. Werden die Gewindeschrauben 24 angezogen, so wird zwischen den Köpfen der Gewindeschrauben 24 und den Muttern 28 die Klemmbacke 25 und die Halteplatte 10 aufeinander zu bewegt, wobei der obere Bereich der Rückseite der Halteplatte 10 quasi ebenfalls eine Klemmbacke 29 bildet. Beim Festziehen der Gewindeschrauben 24 drückt die Klemmbacke 29 auf die Seitenwand 19 des Querträgers 5 und die Klemmbacke 25 auf einen oberen Seitenbereich 30 der Vertikalholme 4. Hierdurch ist ein fester Halt des Fahrwerkelements 8 am Schlitten 1 garantiert.

In den Figuren 1 und 2 ist das Fahrwerkelement in der Position "Radbetrieb" dargestellt. In dieser Position fluchten Halteplatte 10 und Radträger 11 gemäß Figur 2 zueinander. Um die Betriebsart "Kufenbetrieb" herbeizuführen, wird ein federbeaufschlagter Schieber 31 durch Ergreifen eines Handgriffs 32 gelöst (Doppelpfeil 33), so dass das freie Ende 34 des Schiebers 31 aus einer Arretieröffnung 35 an der unteren Stirnseite der Halteplatte 2 tritt. Es erfolgt dann ein Verschwenken des Radträgers 11 in Richtung des Pfeils 36' (Figuren 1 und 2), bis in eine Stellung, in der er zur Halteplatte 10 einen 90°-Winkel einschließt. Dann wird der Schieber 31 losgelassen, so dass er federbeaufschlagt in eine Arretieröffnung 36 an der Vorderseite 17 der Halteplatte 10 eintreten und auf diese Art und Weise den Radträger 11 fixieren kann.

Beim vorstehenden Ausführungsbeispiel der Erfindung und auch bei den nachfolgenden Ausführungsbeispielen sind stets mehrere Fahrwerkelemente 8 an einem Schlitten 1 angeordnet. Weist der Schlitten 1 zwei Querträger 5 beziehungsweise Vertikalholm-Paare 3 auf, so ist jedem Querträger 5 beziehungsweise jedem Vertikalholm-Paar beziehungsweise jeder Stützstrecke ein Fahrwerkelement 8 zugeordnet. Bei mehr als 2 Vertikalholm-Paaren 3 beziehungsweise Querträgern 5 ist vorzugsweise nur das vorderste und das hinterste Vertikalholm-Paar 3 beziehungsweise der vorderste und der hinterste Querträger 5 mit einem Fahrwerkelement 8 versehen.

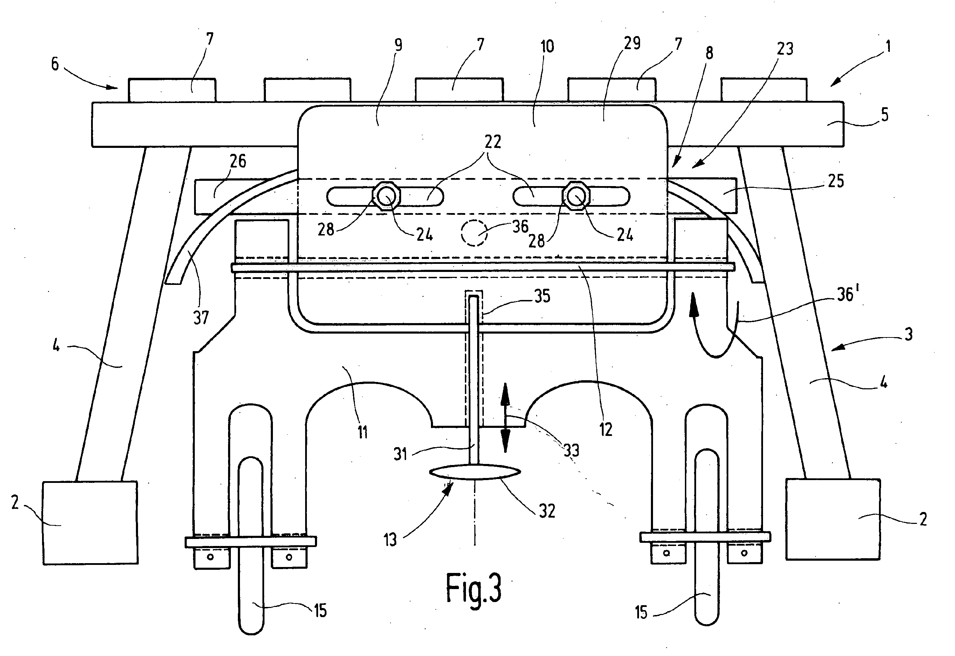

Die Figur 3 zeigt ein weiteres Ausführungsbeispiel eines Fahrwerkelements 8, das weitestgehend ähnlich zum Ausführungsbeispiel der Figuren 1 und 2 ausgebildet ist, so dass nachstehend nur auf die Unterschiede eingegangen werden soll. Es liegt beim Ausführungsbeispiel der Figur 3 ein Schlitten 1 vor, der eine zusätzliche, als Metallprofil ausgebildete Versteifungsstrebe 37 aufweist, die an den beiden Vertikalholmen 4 des Vertikalholm-Paares 3 und auch an dem Querträger 5 befestigt ist. Die als Klemmbacken 25 und 29 ausgebildete Befestigungseinrichtung 23 ist beim Ausführungsbeispiel der Figur 3 derart konzipiert, dass die Abstützung der Halteplatte 10 ebenso erfolgt wie beim Ausführungsbeispiel der Figuren 1 und 2. Die als Querlatte 26 ausgebildete Klemmbacke 25 hingegen ist beim Ausführungsbeispiel der Figur 3 kürzer als beim Ausführungsbeispiel der Figuren 1 und 2 ausgestattet, wobei sie sich an der Versteifungstrebe 37 abstützt. Mithin erfolgt die Klemmung an der Seitenwand 19 des Querträgers 5 und an der entsprechenden Seite der Versteifungsstrebe 37. Sofern durch die Klemmung ein Drehmoment entstehen kann, ist es möglich, den sich aus der Figur 2 ergebenden Freiraum 44 mit einem Füllstück 45 auszufüllen (in Figur 2 gestrichelt gezeichnet).

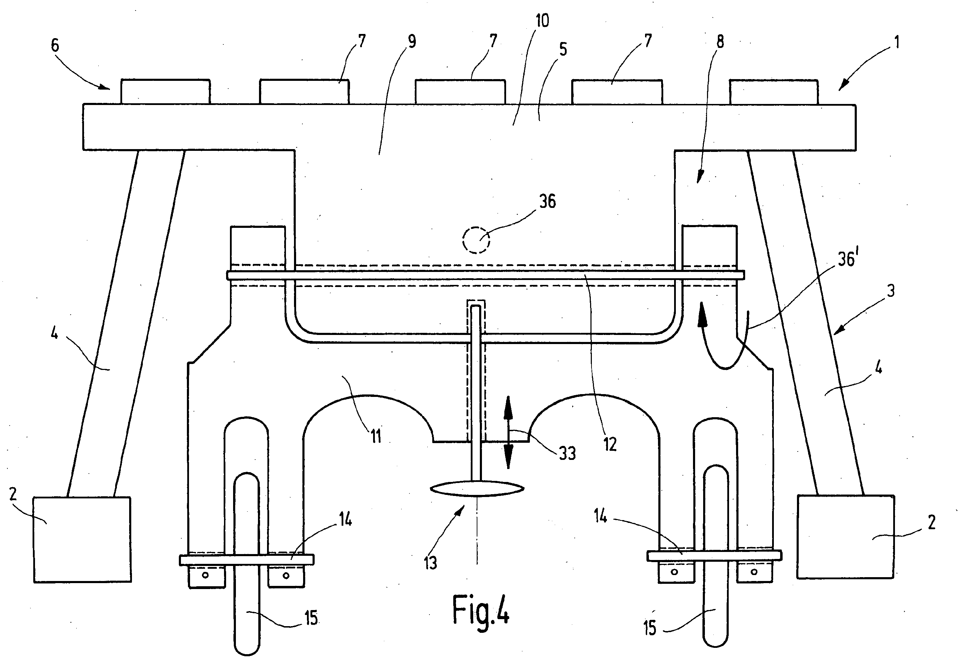

Beim Ausführungsbeispiel der Figur 4 ist - gegenüber dem Ausführungsbeispiel der Figuren 1 und 2 - vorgesehen, dass die Halteplatte 10 einstückig mit dem zugeordneten Querträger 5 ausgebildet ist, dass also die Halteplatte 10 nicht vom Schlitten 1 abgenommen werden kann. Es ist denkbar, dass durch Herausziehen der Drehachse 12 für einen reinen Kufenbetrieb der Radträger 11 vom Schlitten 1 entfernt werden kann.

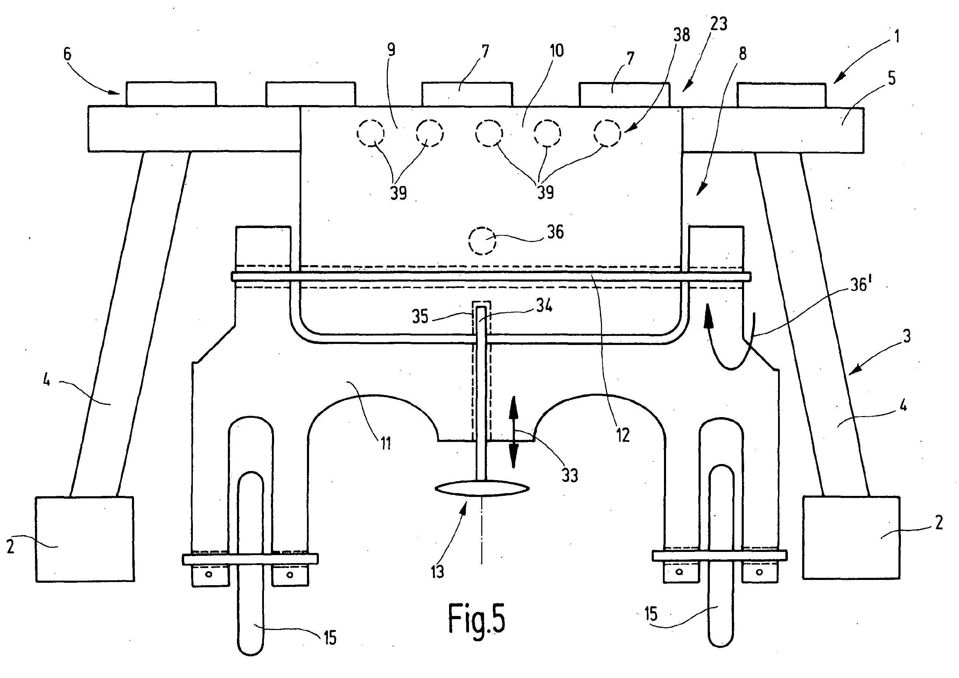

Die Figur 5 zeigt ein Ausführungsbeispiel, bei dem als Befestigungseinrichtung 23 eine Verschraubung 38 von Halteplatte 10 und Querträger 5 zum Einsatz kommt. Hierzu wird die Halteplatte 10 von mehreren Holzschrauben 39 durchsetzt, die in den Querträger 5 eingeschraubt sind. Die Position der Halteplatte 10 am Schlitten 1 entspricht der Position gemäß dem Ausführungsbeispiel der Figuren 1 und 2. Alternativ zu den Schrauben können auch Fixierstifte verwendet werden, die verklebt werden und/oder durch Presspassung die Halteplatte 10 und Querträger 5 verbinden.

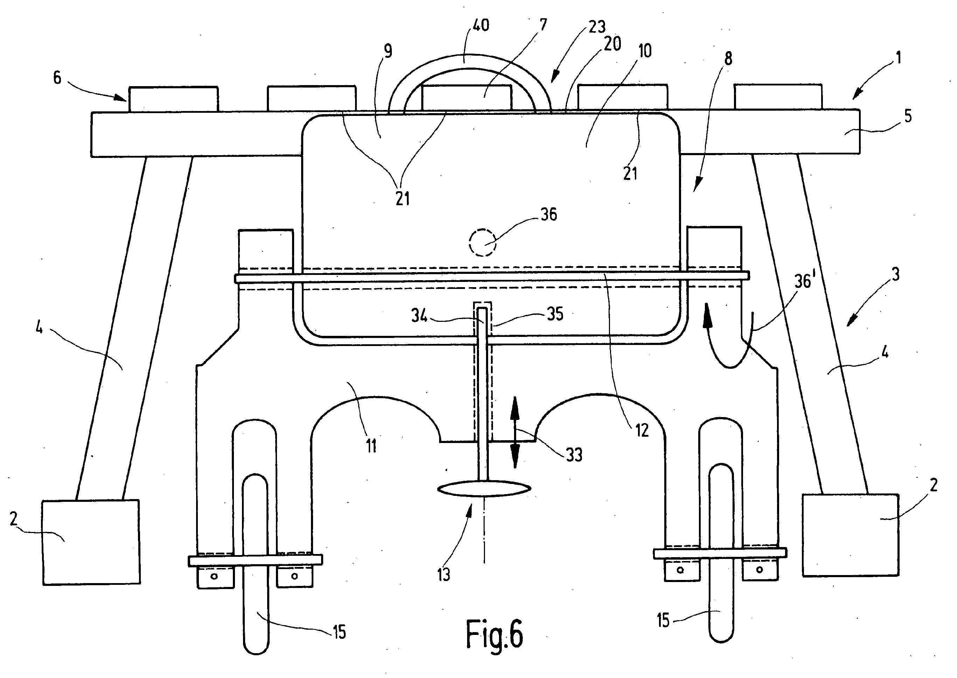

Schließlich zeigt die Figur 6 ein Ausführungsbeispiel eines Fahrwerkelements 8, das der Ausführung der Figur 5 entspricht, wobei jedoch als Befestigungseinrichtung 23 anstelle der Verschraubung 38 mindestens eine Spannschlaufe 40 vorgesehen ist, die eine der Sitzlatten 7 umgreift. Wird mittels eines nicht dargestellten Spanschlosses die Spannschlaufe 40 zugezogen, so legt sich diese aufgrund ihrer Flexibilität stramm an die Sitzlatte 7 an und zieht daher die obere Stirnseite 20 der Halteplatte 10 fest gegen die Unterseite 21 der Sitzfläche 6 beziehungsweise der sich dort befindlichen Sitzlatten 7. Sofern die Halteplatte 10 eine entsprechend große Dicke aufweist, werden durch diese Spannschlaufen-Befestigung hinreichend große Kippmomente von der Halteplatte 10 aufgenommen, so dass es nicht zu einem Verkippen des Fahrwerkelements 8 bei entsprechender Belastung kommt.

## Patentansprüche

1. Fahrwerkelement (8) für einen Schlitten (1), mit einem Basisteil (9) und einem um eine Drehachse (12) schwenkbar mit dem Basisteil (9) verbundenen Radträger (11), der mittels einer Arretiervorrichtung (13) in mindestens zwei, einen Kufenbetrieb oder einen Radbetrieb ermöglichenden Winkellagen relativ zum Basisteil (9) arretierbar ist, wobei das Basisteil (9) als vorzugsweise abnehmbare Halteplatte (10) mit einer Befestigungsein-richtung (23) für einen Querträger (5) und/oder ein Vertikalholm-Paar (3) und/oder eine Versteifungsstrebe (37) und/oder mindestens eine Sitzlatte (7) des Schlittens (1) ausgebildet ist.

2. Fahrwerkelement (8) für einen Schlitten (1), mit einem Basisteil (9) und einem um eine Drehachse (12) schwenkbar mit dem Basisteil (9) verbundenen Radträger (11), der mittels einer Arretiervorrichtung (13) in mindestens zwei, einen Kufenbetrieb oder einen Radbetrieb ermöglichenden Winkellagen relativ zum Basisteil (9) arretierbar ist, wobei das Basisteil (9) einstückig mit einem Querträger (5) des Schlittens (1) ausgebildet ist.

3. Fahrwerkelement nach Anspruch 2, **dadurch gekennzeichnet, dass** das Basisteil (9) als Halteplatte (10) ausgebildet ist.

4. Fahrwerkelement nach einem der vorhergehenden Ansprüche, **dadurch gekennzeichnet, dass** die Befestigungseinrichtung (23) mindestens eine Klemmvorrichtung mit für die Klemmung sich aufeinander zu bewegenden Klemmbacken (25, 29) aufweist.

5. Fahrwerkelement nach einem der vorhergehenden Ansprüche, **dadurch gekennzeichnet, dass** die Klemmwirkung der Klemmbacken (25, 29) der Klemmvorrichtung mittels einer Schraubvorrichtung bewirkt wird.

6. Fahrwerkelement nach einem der vorhergehenden Ansprüche, **dadurch gekennzeichnet, dass** mindestens eine Klemmbacke (25) - im nicht geklemmten Zustand - längsverschieblich an der Halteplatte (10) gelagert ist.

7. Fahrwerkelement nach Anspruch 6, **dadurch gekennzeichnet, dass** die Längsverschiebbarkeit mittels mindestens eines, die Halteplatte (10) durchsetzenden, von der Schraubvorrichtung durchgriffenen Langlochs (22) bewirkt ist.

8. Fahrwerkelement nach einem der vorhergehenden Ansprüche, **gekennzeichnet durch** eine Fixierstiftvorrichtung zwischen Halteplatte (10) und Querträger (5) und/oder Vertikalholm-Paar (3).

9. Fahrwerkelement nach einem der vorhergehenden Ansprüche, **dadurch gekennzeichnet, dass** die Befestigungseinrichtung (23) eine Verschraubung (38) der Halteplatte (10) mit dem Querträger (5) und/oder dem Vertikalholm-Paar (3) aufweist.

10. Fahrwerkelement nach einem der vorhergehenden Ansprüche, **dadurch gekennzeichnet, dass** die Befestigungseinrichtung (23) mindestens eine, um eine Sitzlatte (7) des Schlittens (1) legbare Spannschlaufe (40) aufweist.

11. Schlitten mit mindestens einem Fahrwerkelement nach einem oder mehreren der vorhergehenden Ansprüche.
